# EUROPÄISCHE PATENTSCHRIFT

(11) **EP 3 733 396 B1**
(45) Veröffentlichungstag und Bekanntmachung des Hinweises auf die Patenterteilung: **16.11.2022**
(21) Anmeldenummer: 20166642.7
(22) Anmeldetag: 30.03.2020
(51) Int. Cl.: B32B 1/02, B32B 5/02, B32B 5/18, B32B 7/08, B32B 7/12, B32B 15/04, F16L 59/02

(54) **BRANDSCHUTZMATERIALVERBUND FÜR EINEN GERÄTECONTAINER, GERÄTECONTAINER UND VERWENDUNG DES BRANDSCHUTZMATERIALVERBUNDS**
DEVICE CONTAINER, FIRE-PROTECTION MATERIAL COMPOSITE FOR A DEVICE CONTAINER AND USE OF THE FIRE PROTECTION MATERIAL COMPOSITE
MATIÈRE COMPOSITE IGNIFUGE POUR UN CONTENEUR D'APPAREIL, CONTENEUR D'APPAREIL ET UTILISATION DE LA MATIÈRE COMPOSITE IGNIFUGE

(30) Priorität: 30.04.2019 DE 102019206218
(43) Veröffentlichungstag der Anmeldung: 04.11.2020
(73) Patentinhaber: Siemens Mobility GmbH, 81739 München (DE)
(72) Erfinder: Weigel, Henning, 47807 Krefeld (DE)

(56) Entgegenhaltungen:
- EP-A1- 2 457 723
- EP-A1- 2 868 227
- GB-A- 2 522 255

## Beschreibung

Die Erfindung betrifft einen Brandschutzmaterialverbund für einen Gerätecontainer.

Im Bereich des Brandschutzes sind bereits verschiedene Brandschutzmaterialien bekannt. Diese Materialien verbrauchen jedoch einen gewissen Platz. Je höher die Anforderungen an die Wärmedämmung und den Feuerschutz sind, desto dicker muss das Brandschutzmaterial gewählt werden und desto mehr Platz wird verbraucht.

Besonders im mobilen Bereich ist es eine Bestrebung, Platz einzusparen.

Aus der EP 2 457 723 B1 ist ein Brandschutzmaterialverbund bekannt, umfassend wenigstens eine Innenschicht aus einer geschäumten Polymermischung und wenigstens eine Außenschicht, die wenigstens 20 Gew.-% eines chlorierten organischen Polymers und wenigstens 5 Gew.- %, vorzugsweise wenigstens 10 Gew.-% eines faserförmigen Materials, wobei die Polymermischung zu einem Schaum mit einem Gehalt an geschlossenen Zellen von wenigstens 80 % und einer Dichte von unter 80 kg/m3, vorzugsweise von unter 55 kg/m3, besonders bevorzugt von unter 45 kg/m3 nach ISO 845, geschäumt ist. Wahlweise kann dieser Brandschutzmaterialverbund um eine weitere Schicht ergänzt werden, die in dem Verbund beliebig angeordnet sein kann.

Weitere Beispiele für einen Brandschutzmaterialverbund ergeben sich aus der GB 2 522 255 A und der EP 2 868 227 A1.

Eine Aufgabe der Erfindung ist es deshalb, einen besonders effizienten Brandschutzmaterialverbund bereitzustellen.

Die Aufgabe wird gelöst durch einen Brandschutzmaterialverbund für einen Gerätecontainer, welcher erfindungsgemäß eine dämmfähige Schicht umfasst, die einen Dämmschichtbildner aufweist, der ein unter Hitzeeinwirkung aufschäumendes Material ist.

Das erfindungsgemäße Brandschutzmaterial umfasst weiter eine kühlfähige Schicht, die ein ablatives Brandschutzmaterial aufweist, und eine saugfähige Schicht, die Wasser, welches vom ablativen Brandschutzmaterial freigesetzt wird, aufnehmen kann, wobei die kühlfähige Schicht zwischen der dämmfähigen Schicht und der saugfähigen Schicht angeordnet ist.

Auf diese Weise kann ein besonders effektiver Brandschutzmaterialverbund bereitgestellt werden. Insbesondere kann eine gute Zusammenwirkung der Schichten des Brandschutzmaterialverbunds erzielt werden. Auf diese Weise kann die Dicke des Brandschutzmaterialverbunds vergleichsweise gering gehalten werden.

Der Dämmschichtbildner ist ein unter Hitzeeinwirkung aufschäumendes Material. Das heißt, dass der Dämmschichtbildner unter Hitzeeinwirkung an Volumen zunimmt. Weiter heißt das, dass der Dämmschichtbildner unter Hitzeeinwirkung an Dichte abnimmt.

Insbesondere können sich beim Aufschäumen unter Hitzeeinwirkung, auch Aufquellen unter Hitzeeinwirkung, Hohlräume innerhalb des Dämmschichtbildners bilden. Die Hohlräume sind vorzugsweise gasgefüllt.

Der aufgeschäumte Dämmschichtbildner wirkt vorzugsweise thermisch isolierend.

Insbesondere kann der Dämmschichtbildner ein intumeszenter Stoff sein.

Als Dämmschichtbildner kann beispielsweise "PYRO-SAFE DG" verwendet werden.

Es ist bevorzugt, wenn die dämmfähige Schicht ein Trägermaterial für den Dämmschichtbildner aufweist.

Es ist vorteilhaft, wenn das Trägermaterial schwer entflammbar ist.

Das Trägermaterial kann Fasern aufweisen. Insbesondere kann das Trägermaterial aus Fasern bestehen.

Vorzugsweise umfasst das Trägermaterial Mineralfasern. Die Mineralfasern können insbesondere Glasfasern sein. Weiter können die Mineralfasern beispielsweise Stein-(woll-)fasern sein.

Es ist vorteilhaft, wenn das Trägermaterial eine Textilschicht ist. Die Textilschicht kann insbesondere eine Gewebeschicht sein. Weiter kann die Textilschicht beispielsweise eine Gewirkeschicht, eine Gelegeschicht o. Ä. sein.

Beispielsweise kann die Textilschicht ein Glasfasergewebe, insbesondere ein Glasfilamentgewebe, sein.

Die Textilschicht kann mit dem Dämmschichtbildner beschichtet sein. Weiter können die Fasern des Trägermaterials mit dem Dämmschichtbildner beschichtet sind. Wenn die Fasern der dämmfähigen Schicht als Fasern einer Textilschicht vorliegen, dann können insbesondere die Fasern der Textilschicht mit dem Dämmschichtbildner beschichtet sein.

Die dämmfähige Schicht kann z. B. "PYRO-SAFE DG-CR" sein.

Es ist bevorzugt, wenn die dämmfähige Schicht beispielsweise mindestens 200 g/m² Trägermaterial aufweist.

Weiter ist es vorteilhaft, wenn die dämmfähige Schicht mindestens 700 g/m² Dämmschichtbildner aufweist.

Wie zuvor genannt, weist die kühlfähige Schicht ein ablatives Brandschutzmaterial auf.

Es ist vorteilhaft, wenn das ablative Brandschutzmaterial Wasser bindet. Das heißt, es ist vorteilhaft, wenn in dem ablativen Brandschutzmaterial Wasser gebunden ist.

Zweckmäßigerweise ist das ablative Brandschutzmaterial als Hydrat ausgebildet, in welchem Wasser gebunden ist. Insbesondere kann das Wasser in Form von Hydratwasser, insbesondere in Form von Kristallwasser, gebunden sein.

Zweckmäßigerweise ist das Hydrat ein Festkörper, insbesondere ein kristalliner Festkörper, in welchem Wasser gebunden ist. Das Hydrat kann beispielsweise ein anorganisches Hydrat sein. Insbesondere kann das Hydrat ein Metall-Hydrat sein.

Zweckmäßigerweise ist das ablative Brandschutzmaterial, insbesondere das Hydrat, ein unter Hitzeeinwirkung Wasser freisetzendes Material. Das heißt, dass das ablative Brandschutzmaterial, insbesondere das Hydrat, unter Hitzeeinwirkung zweckmäßigerweise Wasser freisetzt.

Insbesondere kann das Hydrat das bisher gebundene Wasser unter Hitzeeinwirkung freisetzen. Bei der Wasserfreisetzung kann das Hydrat in ein Anhydrat umgewandelt werden.

Zweckmäßigerweise verbraucht das ablative Brandschutzmaterial, insbesondere das Hydrat, dann, wenn es Wasser freisetzt, Energie. Das heißt, dass das Wasser bei einer endothermen Reaktion freigesetzt wird. Auf diese Weise kann das ablative Brandschutzmaterial kühlend wirken.

Ferner kann das vom ablativen Brandschutzmaterial freigesetzte Wasser verdunsten und/oder verdampfen. Zweckmäßigerweise wird bei der Verdunstung bzw. bei der Verdampfung Energie verbraucht. Auf diese Weise kann eine weitere Kühlwirkung erzielt werden.

Die kühlende Schicht kann - insbesondere neben dem ablativen Brandschutzmaterial - Fasern umfassen. Die Fasern können beispielsweise Mineralfasern (insbesondere Glasfasern) und/oder Polyesterurethanfasern sein.

Es ist vorteilhaft, wenn die kühlende Schicht zu mindestens 70 Gew%, insbesondere zu mindestens 80 Gew%, aus ablativem Brandschutzmaterial besteht.

Als kühlende Schicht kann z. B. ENEX, insbesondere ENEX A, verwendet werden.

Es ist vorteilhaft, wenn der Brandschutzmaterialverbund mindestens 1600 g/m² kühlfähige Schicht aufweist. Weiter kann der Brandschutzmaterialverbund, insbesondere die kühlfähige Schicht, mindestens 1280 g/m² ablatives Brandschutzmaterial aufweisen.

Die saugfähige Schicht des Brandschutzmaterialverbunds ist vorzugsweise porös und/oder schwammartig. Es ist vorteilhaft, wenn die saugfähige Schicht schwer entflammbar ist.

Beispielsweise kann die saugfähige Schicht ein Glasvlies, ein Nadelfilz und/oder einen Schaum, insbesondere einen Melaminharzschaum, umfassen.

Die saugfähige Schicht kann Wasser, welches vom ablativen Brandschutzmaterial freigesetzt wird, aufnehmen. Auf diese Weise kann sichergestellt werden, dass die Verdunstung und/oder Verdampfung von Wasser innerhalb des Brandschutzmaterialverbunds stattfindet.

Es ist vorteilhaft, wenn die saugfähige Schicht benachbart zu der kühlfähigen Schicht angeordnet ist.

Der Brandschutzmaterialverbund kann außerdem eine selbstklebende Schicht zur Befestigung des Brandschutzmaterialverbunds auf einer Oberfläche aufweisen.

Die selbstklebende Schicht kann beispielsweise eine Schicht auf Acrylatbasis sein.

Es ist bevorzugt, wenn die kühlfähige Schicht und die saugfähige Schicht zwischen der dämmfähigen Schicht einerseits und der selbstklebenden Schicht andererseits angeordnet sind.

Falls die kühlfähige Schicht zwischen der dämmfähigen Schicht und der saugfähigen Schicht angeordnet ist, ist vorzugsweise die selbstklebende Schicht auf der saugfähigen Schicht aufgebracht.

Zweckmäßigerweise hat der Brandschutzmaterialverbund eine Gesamtdicke von mindestens 4,0 mm. Es ist bevorzugt, wenn der Brandschutzmaterialverbund eine Gesamtdicke von mindestens 4,3 mm aufweist.

Beispielsweise kann die dämmfähige Schicht mindestens 0,5 mm, insbesondere mindestens 0,7 mm, besonders bevorzugt mindestens 1,1 mm, dick sein.

Weiter kann die kühlfähige Schicht beispielsweise mindestens 1,0 mm, insbesondere mindestens 1,2 mm, dick sein.

Beispielsweise kann die saugfähige Schicht mindestens 2,0 mm dick sein.

Ferner ist die Erfindung gerichtet auf einen Gerätecontainer mit einem Gehäuse, einem Innenraum und mit dem zuvor genannten Brandschutzmaterialverbund und/oder eine seiner Weiterbildungen. Zweckmäßigerweise umschließt der Brandschutzmaterialverbund zumindest den Innenraum.

Zweckmäßigerweise umschließt das Gehäuse den Innenraum.

Der Brandschutzmaterialverbund hat vorzugsweise eine dem Gehäuse zugewandte Seite und eine von dem Gehäuse abgewandte Seite.

Es ist bevorzugt, wenn die dämmfähige Schicht an der von dem Gehäuse abgewandten Seite angeordnet ist.

Bei einem Brand kann die von dem Gehäuse abgewandte Seite des Brandschutzmaterialverbunds eine dem Brand zugewandte Seite des Brandschutzmaterialverbunds sein. Es ist bevorzugt, wenn bei einem Brand die dämmfähige Schicht auf der dem Brand zugewandte Seite angeordnet ist.

Vorzugsweise ist der Brandschutzmaterialverbund auf das Gehäuse, insbesondere auf einer Oberfläche des Gehäuses, aufgebracht. Beispielsweise kann der Brandschutzmaterialverbund auf einer inneren, d. h. dem Innenraum zugewandten, Oberfläche des Gehäuses aufgebracht sein. Weiter kann der Brandschutzmaterialverbund beispielsweise auf einer äußeren, d. h. von dem Innenraum abgewandten, Oberfläche des Gehäuses aufgebracht sein.

Wenn der Brandschutzmaterialverbund eine selbstklebende Schicht aufweist, dann ist der Brandschutzmaterialverbund vorzugsweise auf das Gehäuse aufgeklebt.

Ferner kann der Brandschutzmaterialverbund auf dem Gehäuse aufgeschraubt, an das Gehäuse festgeklemmt o. Ä. sein.

Das Gehäuse kann beispielsweise ein Metallgehäuse sein.

Zweckmäßigerweise erreicht der Gerätecontainer die brandschutztechnische Einstufung EI 15. Das heißt, der Gerätecontainer weist zweckmäßigerweise eine Wärmedämmung von 15 min und einen Feuerwiderstand von 15 min auf.

Ferner ist die Erfindung gerichtet auf eine Verwendung des zuvor genannten Brandschutzmaterialverbunds und/oder eine seiner Weiterbildungen.

Im Falle eines Brandes, welcher Hitze erzeugt, schäumt (bei der Verwendung) der Dämmschichtbildner der dämmfähigen Schicht aufgrund der Hitzeeinwirkung auf, sodass eine aufgeschäumte Schicht gebildet wird, wobei die aufgeschäumte Schicht thermisch isoliert. Auf diese Weise kann eine thermisch isolierende Wirkung erzielt werden.

Weiter wird Wasser, welches in dem ablativen Brandschutzmaterial der kühlfähigen Schicht gebunden ist, aufgrund der Hitzeeinwirkung unter Energieaufnahme freigesetzt. Das heißt, dass das ablative Brandschutzmaterial dann, wenn das Wasser freigesetzt wird, Energie aufnimmt. Auf diese Weise kann eine Kühlwirkung erzielt werden.

Weiter nimmt die saugfähige Schicht zumindest einen Teil des freigesetzten Wassers auf.

Das freigesetzte Wasser verdunstet und/oder verdampft unter Energieaufnahme. Auf diese Weise kann eine weitere Kühlwirkung erzielt werden.

Auf diese Weise kann der Brandschutzmaterialverbund besonders effektiv wirken.

Es ist vorteilhaft, wenn das Aufschäumen des Dämmschichtbildners bei einer Temperatur von über 100°C, insbesondere über 150°C, einsetzt. Weiter ist es vorteilhaft, wenn das Freisetzen von Wasser bei einer Temperatur von über 150°C, insbesondere über 200°C, einsetzt. Insbesondere kann das Freisetzen von Wasser bei derselben Temperatur oder bei einer höheren Temperatur einsetzen als das Aufschäumen des Dämmschichtbildners. Beispielsweise kann das Freisetzen von Wasser bei einer Temperatur von 250°C einsetzen.

Es zeigt:
- Figur: einen Gerätecontainer mit einem Gehäuse und mit einem Brandschutzmaterialverbund, welches das Gehäuse umschließt.

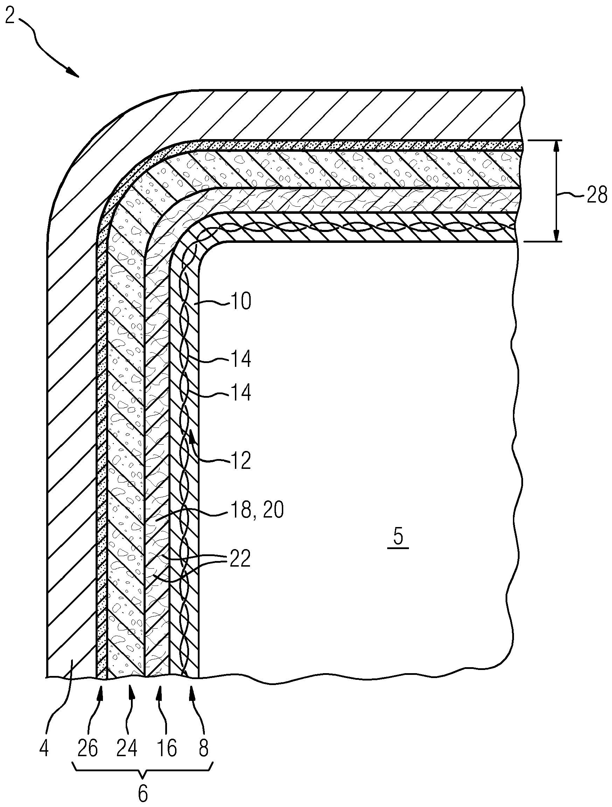

Die einzige Figur zeigt einen Gerätecontainer 2 mit einem Gehäuse 4 und einem Innenraum 5, welcher von dem Gehäuse 4 umschlossen wird. Der Gerätecontainer 2 weist außerdem einen Brandschutzmaterialverbund 6 auf, welcher den Innenraum 5 umschließt.

Der Gerätecontainer 2 ist als Gerätecontainer 2 für ein Verkehrsmittel, z. B. für ein Schienenfahrzeug, einen Bus, ein Flugzeug, ein Schiff usw., ausgebildet.

In dem Innenraum 5 kann ein Gerät platziert werden/sein (nicht gezeigt).

In diesem Beispiel ist der Brandschutzmaterialverbund 6 auf einer dem Innenraum 5 zugewandten Oberfläche des Gehäuses 4 aufgebracht.

Gerät ein im Innenraum 5 platziertes Gerät in Brand, so wird die Umgebung vor dem Brand geschützt.

Das Gehäuse 4 des Gerätecontainers 2 besteht in diesem Beispiel aus Metall.

Der Brandschutzmaterialverbund 6 umfasst mehrere Schichten:
Der Brandschutzmaterialverbund 6 umfasst eine dämmfähige Schicht 8. Die dämmfähige Schicht 8 weist einen Dämmschichtbildner 10 auf.

Die dämmfähige Schicht 8 weist außerdem ein Trägermaterial 12 für den Dämmschichtbildner 10 auf. Das Trägermaterial 12 umfasst in diesem Beispiel Glasfasern 14. Das Trägermaterial 12 ist als Textilschicht, insbesondere als Gewebeschicht, ausgebildet.

In diesem Beispiel ist das Trägermaterial 12 als Glasfasergewebe ausgebildet.

Die dämmfähige Schicht 8 weist mindestens 200 g/m² Trägermaterial 12, hier also mindestens 200 g/m² Glasfasern 14, auf.

Das als Glasfasergewebe ausgebildete Trägermaterial 12 ist mit dem Dämmschichtbildner 10 beschichtet.

Prinzipiell kann auch ein anderes Trägermaterial 12 für den Dämmschichtbildner 10 verwendet werden.

Der Dämmschichtbildner 10 ist ein unter Hitzeeinwirkung aufschäumendes Material. Der Dämmschichtbildner 10 kann z. B. "PYRO-SAFE DG" sein.

Die dämmfähige Schicht 8 weist mindestens 700 g/m² Dämmschichtbildner auf.

Die dämmfähige Schicht 8 kann z. B. "PYRO-SAFE DG-CR" sein.

Die dämmfähige Schicht 8 kann beispielsweise 1,1 mm dick sein.

Der Brandschutzmaterialverbund 6 umfasst weiter eine kühlfähige Schicht 16. Die kühlfähige Schicht 16 weist ein ablatives Brandschutzmaterial 18 auf.

Das ablative Brandschutzmaterial 18 ist ein Hydrat 20, in welchem Wasser - hier in Form von Kristallwasser - gebunden ist. In diesem Fall ist das Hydrat 20 ein Metall-Hydrat. Unter Hitzeeinwirkung kann das Hydrat das gebundene Wasser - in einer endothermen Reaktion, d. h. unter Energieverbrauch - freisetzen. Auf diese Weise kann das ablative Brandschutzmaterial 18 eine Kühlwirkung entfalten.

Neben dem ablativen Brandschutzmaterial 18 umfasst die kühlende Schicht 16 Fasern 22. Insbesondere umfasst die kühlende Schicht 16 Mineralfasern, hier Glasfasern, und Polyesterurethanfasern als Fasern 22.

Die kühlende Schicht 16 besteht zu 80 Gew% bis 87 Gew% aus ablativem Brandschutzmaterial 18. Weiter besteht die kühlende Schicht 16 zu 13 Gew% bis 20 Gew% aus Fasern 22, hier zu 2 Gew% bis 4 Gew% aus Glasfasern und zu 8 Gew% bis 12 Gew% aus Polyesterurethanfasern.

Der Brandschutzmaterialverbund 6 weist 1600 g/m² kühlfähige Schicht 16 auf. Insbesondere weist der Brandschutzmaterialverbund 6 mindestens 1280 g/m² ablatives Brandschutzmaterial 18 auf.

Die kühlfähige Schicht 16 kann beispielsweise 1,2 mm dick sein.

Der Brandschutzmaterialverbund 6 umfasst weiter eine saugfähige Schicht 24. Die saugfähige Schicht 24 ist porös und/oder schwammartig. In diesem Beispiel ist die saugfähige Schicht 24 ein Melaminharzschaum.

Die saugfähige Schicht 24 kann beispielsweise 2,0 mm dick sein.

Ferner umfasst der Brandschutzmaterialverbund 6 eine selbstklebende Schicht 26 auf Acrylatbasis.

Die selbstklebende Schicht 26 kann beispielsweise weniger als 1,0 mm, insbesondere weniger als 0,5 mm, dick sein.

Die selbstklebende Schicht 26 ist zur Befestigung, insbesondere zum Ankleben, des Brandschutzmaterialverbunds 6 auf einer Oberfläche geeignet. Insbesondere ist der Brandschutzmaterialverbund 6 unter Verwendung der selbstklebenden Schicht 26 auf dem Gehäuse 4 des Gerätecontainers 2, hier auf der dem Innenraum 5 zugewandten Oberfläche des Gehäuses 4, aufgeklebt.

Prinzipiell könnte der Brandschutzmaterialverbund 6 auch anderweitig auf dem Gehäuse 4 des Gerätecontainers 2 befestigt sein (z. B. angeschraubt, festgeklemmt o. Ä.). In diesem Fall könnte auf die selbstklebende Schicht 26 verzichtet werden.

Die kühlfähige Schicht 16 und die saugfähige Schicht 24 sind zwischen der dämmfähigen Schicht 8 einerseits und der selbstklebenden Schicht 26 andererseits angeordnet.

Weiter ist die kühlfähige Schicht 16 zwischen der dämmfähigen Schicht 8 und der saugfähigen Schicht 24 angeordnet.

Der Brandschutzmaterialverbund 6 weist eine Gesamtdicke 28 von 4,3 mm auf.

Auf diese Weise kann der Brandschutzmaterialverbund 6 effektiv und gleichzeitig platzsparend sein.

Der Gerätecontainer 2 mit dem Brandschutzmaterialverbund 6 erreicht die brandschutztechnische Einstufung EI 15. Das heißt, der Gerätecontainer 2 weist zweckmäßigerweise eine Wärmedämmung von 15 min und einen Feuerwiderstand von 15 min auf.

Die Gesamtdicke 28 des Brandschutzmaterialverbunds 6 kann auch größer gewählt werden. Auf diese Weise kann die Wärmedämmung und der Feuerwiderstand des Gerätecontainers 2 erhöht werden.

Im Falle eines Brandes im Innenraum 5, welcher Brand Hitze erzeugt, schäumt der Dämmschichtbildner 10 der dämmfähigen Schicht 8 aufgrund der Hitzeeinwirkung auf. Auf diese Weise wird eine aufgeschäumte Schicht gebildet. Die aufgeschäumte Schicht isoliert thermisch. Auf diese Weise wird eine thermisch isolierende Wirkung erzielt. Aufgrund der thermisch isolierenden Wirkung wird eine durch den Brand bedingte Erwärmung des Gehäuses 4 und/oder der Umgebung reduziert und/oder verlangsamt.

Im Falle eines Brandes wird außerdem Wasser, welches in dem ablativen Brandschutzmaterial 18 der kühlfähigen Schicht 16 gebunden ist, aufgrund der Hitzeeinwirkung unter Energieaufnahme freigesetzt. Auf diese Weise wird eine Kühlwirkung erzielt. Aufgrund der Kühlwirkung wird eine durch den Brand bedingte Erwärmung des Gehäuses 4 und/oder der Umgebung reduziert und/oder verlangsamt.

Die saugfähige Schicht 24 nimmt zumindest einen Teil des freigesetzten Wassers auf.

Das freigesetzte Wasser verdunstet und/oder verdampft unter Energieaufnahme. Dabei kann ein Teil des freigesetzten Wassers noch in der kühlfähigen Schicht 16 verdunsten und/oder verdampfen. Weiter kann zumindest ein Teil des freigesetzten Wassers in der saugfähigen Schicht 24 verdunsten und/oder verdampfen. Auf diese Weise wird eine weitere Kühlwirkung erzielt. Aufgrund der weiteren Kühlwirkung wird eine durch den Brand bedingte Erwärmung des Gehäuses 4 und/oder der Umgebung weiter reduziert und/oder verlangsamt.

Es ist bevorzugt, wenn das freigesetzte Wasser zumindest großteils in der saugfähigen Schicht 24 und/oder noch in der kühlfähigen Schicht 16 verdunstet und/oder verdampft. Auf diese Weise kann das Gehäuse 4 des Gerätecontainers 2 besonders effektiv gekühlt werden.

Auf diese Weise wird die Umgebung vor dem Brand im Innenraum 5 des Gerätecontainers 2 geschützt.

In ähnlicher Weise kann auch ein im Innenraum 5 platziertes Gerät vor einem Brand in der Umgebung geschützt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche festgelegten Schutzumfang der Erfindung zu verlassen.

## Patentansprüche

1. Brandschutzmaterialverbund (6) für einen Gerätecontainer (2),
umfassend
- eine dämmfähige Schicht (8), die einen Dämmschichtbildner (10) aufweist, der ein unter Hitzeeinwirkung aufschäumendes Material ist,
- eine kühlfähige Schicht (16), die ein ablatives Brandschutzmaterial (18) aufweist, und
- eine saugfähige Schicht (24), die Wasser, welches vom ablativen Brandschutzmaterial freigesetzt wird, aufnehmen kann, wobei
- die kühlfähige Schicht (16) zwischen der dämmfähigen Schicht (8) und der saugfähigen Schicht (24) angeordnet ist.

2. Brandschutzmaterialverbund (6) nach Anspruch 1,
**dadurch gekennzeichnet, dass**
die dämmfähige Schicht (8) ein Trägermaterial (12) für den Dämmschichtbildner (10) aufweist.

3. Brandschutzmaterialverbund (6) nach Anspruch 2,
**dadurch gekennzeichnet, dass**
das Trägermaterial (12) Mineralfasern (14), insbesondere Glasfasern (14), umfasst.

4. Brandschutzmaterialverbund (6) nach Anspruch 2 oder 3,
**dadurch gekennzeichnet, dass**
das Trägermaterial (12) eine Textilschicht, insbesondere eine Gewebeschicht, ist.

5. Brandschutzmaterialverbund (6) nach einem der Ansprüche 2 bis 4,
**dadurch gekennzeichnet, dass**
die dämmfähige Schicht (8) mindestens 200 g/m² Trägermaterial (12) aufweist.

6. Brandschutzmaterialverbund (6) nach einem der vorgehenden Ansprüche,
**dadurch gekennzeichnet, dass**
die dämmfähige Schicht (8) mindestens 700 g/m² Dämmschichtbildner (10) aufweist.

7. Brandschutzmaterialverbund (6) nach einem der vorgehenden Ansprüche,
**dadurch gekennzeichnet, dass**
das ablative Brandschutzmaterial (18) als Hydrat (20) ausgebildet ist, in welchem Wasser gebunden ist.

8. Brandschutzmaterialverbund (6) nach einem der vorgehenden Ansprüche,
welches mindestens 1600 g/m² kühlfähige Schicht (16) aufweist, insbesondere mindestens 1280 g/m² ablatives Brandschutzmaterial (18).

9. Brandschutzmaterialverbund (6) nach einem der vorgehenden Ansprüche,
**gekennzeichnet durch**
eine selbstklebende Schicht (26) zur Befestigung des Brandschutzmaterialverbunds (6) auf einer Oberfläche.

10. Brandschutzmaterialverbund (6) nach Anspruch 9,
**dadurch gekennzeichnet, dass**
die kühlfähige Schicht (16) und die saugfähige Schicht (24) zwischen der dämmfähigen Schicht (8) einerseits und der selbstklebenden Schicht (26) andererseits angeordnet sind.

11. Brandschutzmaterialverbund (6) nach einem der vorgehenden Ansprüche,
**gekennzeichnet durch**
eine Gesamtdicke (28) von mindestens 4,0 mm, insbesondere von mindestens 4,3 mm.

12. Gerätecontainer (2) mit einem Gehäuse (4), einem Innenraum (5) und dem Brandschutzmaterialverbund (6) nach einem der vorhergehenden Ansprüche, wobei der Brandschutzmaterialverbund (6) zumindest den Innenraum (5) umschließt.

13. Verwendung des Brandschutzmaterialverbunds (6) nach einem der Ansprüche 1 bis 11,
wobei im Falle eines Brandes, welcher Hitze erzeugt,
- der Dämmschichtbildner (10) der dämmfähigen Schicht (8) aufgrund der Hitzeeinwirkung aufschäumt, sodass eine aufgeschäumte Schicht gebildet wird, wobei die aufgeschäumte Schicht thermisch isoliert,
- Wasser, welches in dem ablativen Brandschutzmaterial (18) der kühlfähigen Schicht (16) gebunden ist, aufgrund der Hitzeeinwirkung unter Energieaufnahme freigesetzt wird,
- die saugfähige Schicht (24) zumindest einen Teil des freigesetzten Wassers aufnimmt und
- das freigesetzte Wasser unter Energieaufnahme verdunstet und/oder verdampft.

## Claims

1. Composite fire protection material (6) for an apparatus container (2),
comprising
- an insulative layer (8), which comprises an insulating layer former (10) which is a material which foams on exposure to heat,
- a cooling-capable layer (16), which comprises an ablative fire protection material (18), and
- an absorptive layer (24), which is able to take up water which is released from the ablative fire protection material, where
- the cooling-capable layer (16) is disposed between the insulative layer (8) and the absorptive layer (24).

2. Composite fire protection material (6) according to Claim 1,
**characterized in that**
the insulative layer (8) comprises a carrier material (12) for the insulating layer former (10).

3. Composite fire protection material (6) according to Claim 2,
**characterized in that**
the carrier material (12) comprises mineral fibres (14), more particularly glass fibres (14).

4. Composite fire protection material (6) according to Claim 2 or 3,
**characterized in that**
the carrier material (12) is a textile layer, more particularly a woven fabric layer.

5. Composite fire protection material (6) according to any of Claims 2 to 4,
**characterized in that**
the insulative layer (8) comprises at least 200 g/m² of carrier material (12).

6. Composite fire protection material (6) according to any of the preceding claims,
**characterized in that**
the insulative layer (8) comprises at least 700 g/m² of insulating layer former (10).

7. Composite fire protection material (6) according to any of the preceding claims,
**characterized in that**
the ablative fire protection material (18) takes the form of a hydrate (20) in which water is bound.

8. Composite fire protection material (6) according to any of the preceding claims,
which comprises at least 1600 g/m² of cooling-capable layer (16), more particularly at least 1280 g/m² of ablative fire protection material (18).

9. Composite fire protection material (6) according to any of the preceding claims,
**characterized by**
a self-adhesive layer (26) for securing the composite fire protection material (6) on a surface.

10. Composite fire protection material (6) according to Claim 9,
**characterized in that**
the cooling-capable layer (16) and the absorptive layer (24) are disposed between the insulative layer (8) on the one hand and the self-adhesive layer (26) on the other hand.

11. Composite fire protection material (6) according to any of the preceding claims,
**characterized by**
a total thickness (28) of at least 4.0 mm, more particularly of at least 4.3 mm.

12. Apparatus container (2) having a housing (4), an interior (5) and the composite fire protection material (6) according to any of the preceding claims, where the composite fire protection material (6) encloses at least the interior (5).

13. Use of the composite fire protection material (6) according to any of Claims 1 to 11,
where in the event of a fire which generates heat,
- the insulating layer former (10) of the insulative layer (8) foams because of the exposure to heat, and so a foamed layer is formed, the foamed layer providing thermal insulation,
- water which is bound in the ablative fire protection material (18) of the cooling-capable layer (16) is released because of the exposure to heat, with absorption of energy,
- the absorptive layer (24) takes up at least part of the water released, and
- the water released evaporates and/or vaporizes, with absorption of energy.

## Revendications

1. Composite (6) de matière ignifuge pour un conteneur (2) d'appareil,
comprenant
- une couche (8) apte à l'isolation, qui a un formeur (10) de couche isolante, qui est un matériau moussant sous l'effet de la chaleur,
- une couche (16) apte à refroidir, qui a un matériau (18) ignifuge ablatif, et
- une couche (24) apte à l'aspiration, qui peut recevoir de l'eau dégagée par le matériau abrasif ablatif, dans lequel
- la couche (16) apte au refroidissement est disposée entre la couche (8) apte à l'isolation et la couche (24) apte à l'aspiration.

2. Composite (6) de matériau ignifuge suivant la revendication 1,
**caractérisé en ce que**
la couche (8) apte à l'isolation a un matériau (12) de support du formeur (10) de couche isolante.

3. Composite (6) de matériau ignifuge suivant la revendication 2,
**caractérisé en ce que**
le matériau (12) de support comprend des fibres (14) minérales, notamment des fibres (14) de verre.

4. Composite (6) de matériau ignifuge suivant la revendication 2 ou 3,
**caractérisé en ce que**
le matériau (12) de support est une couche textile, notamment une couche de tissu.

5. Composite (6) de matériau ignifuge suivant la revendication 2 à 4,
**caractérisé en ce que**
la couche (8) apte à l'isolation a au moins 200 g/m² de matériau (12) support.

6. Composite (6) de matériau ignifuge suivant l'une des revendications précédentes,
**caractérisé en ce que**
la couche (8) apte à l'isolation a au moins 700 g/m² de formeur (10) de couche isolante.

7. Composite (6) de matériau ignifuge suivant l'une des revendications précédentes,
**caractérisé en ce que**
le matériau (18) ignifuge ablatif est constitué sous la forme d'un hydrate (20), dans lequel est fixée de l'eau.

8. Composite (6) de matériau ignifuge suivant l'une des revendications précédentes,
qui a au moins 1600 g/m² de couche (16) apte au refroidissement, notamment au moins 1280 g/m² de matériau (18) ignifuge ablatif.

9. Composite (6) de matériau ignifuge suivant l'une des revendications précédentes,
**caractérisé par**
une couche (26) autocollante de fixation du composite (6) de matériau ignifuge à une surface.

10. Composite (6) de matériau ignifuge suivant la revendication 9,
**caractérisé en ce que**
la couche (16) apte au refroidissement et la couche (24) apte à l'aspiration sont disposées entre la couche (8) apte à l'isolation d'une part et la couche (26) autocollante d'autre part.

11. Composite (6) de matériau ignifuge suivant l'une des revendications précédentes,
**caractérisé par**
une épaisseur (28) d'ensemble d'au moins 4,0 mm, notamment d'au moins d'au moins 4,3 mm.

12. Conteneur (2) d'appareil comprenant une enveloppe (4), un espace (5) intérieur et le composite (6) de matériau ignifuge suivant l'une des revendications précédentes, dans lequel le composite (6) de matériau ignifuge entoure au moins l'espace (5) intérieur.

13. Utilisation du composite (6) de matériau ignifuge suivant l'une des revendications 1 à 11,
dans lequel, dans le cas d'un incendie, qui produit de la chaleur,
- le formeur (10) de couche d'isolation fait mousser la couche (8) apte à l'isolation en raison de l'effet de la chaleur, de manière à former une couche moussée, la couche moussée isolant thermiquement,
- de l'eau, qui est fixée dans le matériau (18) ignifuge ablatif de la couche (16) apte au refroidissement, est dégagée en raison de l'effet de la chaleur avec absorption d'énergie,
- la couche (24) apte à l'aspiration absorbe au moins une partie de l'eau dégagée, et
- l'eau dégagée se volatilise et/ou s'évapore avec absorption d'énergie.
